# EUROPEAN PATENT SPECIFICATION

(11) **EP 0 610 186 B1**
(45) Date of publication and mention of the grant of the patent: **29.03.2000**
(21) Application number: 92900003.2
(22) Date of filing: 30.10.1991
(51) Int. Cl.: B01J 38/38, B01J 38/34, C10G 11/00

(54) **A PROCESS FOR REGENERATING SPENT FLUIDIZED CATALYTIC CRACKING CATALYST**
VERFAHREN ZUR REGENERIEREN VON VERBRAUCHTEM FCC-KATALYSATOR
PROCEDE DE REGENERATION D'UN CATALYSEUR USE DE CRAQUAGE CATALYTIQUE FLUIDIFIE

(43) Date of publication of application: 17.08.1994
(73) Proprietor: MOBIL OIL CORPORATION, Fairfax, Virginia 22037-0001 (US)
(72) Inventor: OWEN, Hartley, Worton, Maryland 21678 (US); SCHIPPER, Paul, Herbert, Doylestown, PA 18901 (US)
(74) Representative: Kador & Partner
(86) International application number: US9107980
(87) International publication number: WO9308912

(56) References cited:
- WO-A-92/01511
- WO-A-92/01512
- US-A- 4 211 636
- US-A- 4 448 753
- US-A- 4 849 091
- US-A- 4 875 994
- US-A- 4 917 790
- US-A- 5 011 592
- US-A- 5 077 251

## Description

This invention relates to a process for regenerating spent fluidized catalytic cracking catalyst.

Catalytic cracking is the backbone of many refineries. It converts heavy feeds to lighter products by cracking large molecules into smaller molecules. Catalytic cracking operates at low pressures, without hydrogen addition, in contrast to hydrocracking, which operates at high hydrogen partial pressures. Catalytic cracking is inherently safe as it operates with very little oil actually in inventory during the cracking process.

There are two main variants of the catalytic cracking process: the moving bed process and the far more popular and efficient fluidized bed process.

In the fluidized catalytic cracking (FCC) process, catalyst circulates between a cracking reactor and a catalyst regenerator. In the reactor, hydrocarbon feed contacts a source of hot, regenerated catalyst, which vaporizes and cracks the feed at a temperature of 425-600°C, usually 460-560°C. The cracking reaction deposits carbonaceous hydrocarbons or coke on the catalyst, thereby deactivating the catalyst. The cracked products are separated from the coked catalyst, which is then stripped of volatiles, usually with steam, in a catalyst stripper. The stripped catalyst is then passed to the catalyst regenerator, where coke is burned from the catalyst with oxygen containing gas, usually air. Decoking restores catalyst activity and simultaneously heats the catalyst to, for example, 500-900°C, usually 600-750°C. This heated catalyst is recycled to the cracking reactor to crack more fresh feed. Flue gas formed by burning coke in the regenerator may be treated for removal of particulates and for conversion of carbon monoxide, after which the flue gas is normally discharged into the atmosphere.

Catalytic cracking has undergone progressive development since the 1940s, with the trend in fluid catalytic cracking being towards all riser cracking and use of zeolite catalysts.

Riser cracking gives higher yields of valuable products than dense bed cracking. Most FCC units now use all riser cracking, with hydrocarbon residence times in the riser of less than 10 seconds, and even less than 5 seconds.

Zeolite-containing catalysts having high activity and selectivity are now used in most FCC units. These catalysts work best when coke on the catalyst after regeneration is less than 0.2 wt %, and preferably less than 0.05 wt %.

To regenerate FCC catalysts to these low residual carbon levels, and to burn CO completely to CO2 within the regenerator (to conserve heat and minimize air pollution) many FCC operators add a CO combustion promoter metal to the catalyst or to the regenerator.

U.S. Patent Nos 4,072,600 and 4,093,535 teach use of combustion-promoting metals such as Pt, Pd, Ir, Rh, Os, Ru and Re in cracking catalysts in concentrations of 0.01 to 50 ppm, based on total catalyst inventory.

As the process and catalyst have improved, refiners have attempted to use the process to upgrade a wider range of feedstocks, in particular, feedstocks that are heavier, and also contain more metals and sulfur than have previously been permitted in the feed to a fluid catalytic cracking unit. These heavier, dirtier feeds have placed a growing demand on the regenerator. Processing resids has exacerbated existing problem areas in the regenerator, notably steam, temperature and NOx. These problems will each be reviewed in more detail below.

### Steam

Steam is always present in FCC regenerators although it is known to cause catalyst deactivation. Steam is not intentionally added, but is invariably present, usually as absorbed or entrained steam from steam stripping of the catalyst or as water of combustion formed in the regenerator. Steam deactivation becomes more of a problem as regenerators get hotter, since higher temperatures accelerate the deactivating effects of steam.

### Temperature

Regenerators are being required to operate at higher and higher temperatures. This is because most FCC units are heat balanced, that is, the endothermic heat of the cracking reaction is supplied by burning the coke deposited on the catalyst. With heavier feeds, more coke is deposited on the catalyst than is needed for the cracking reaction. The regenerator gets hotter, and the extra heat is rejected as high temperature flue gas. Many refiners severely limit the amount of resid or similar high CCR feeds to that amount which can be tolerated by the unit. High temperatures are a problem for the metallurgy of many units, but more importantly, are a problem for the catalyst. In the regenerator, the burning of coke and unstripped hydrocarbons leads to much higher surface temperatures on the catalyst than the measured dense bed or dilute phase temperature. This is discussed by Occelli et al in Dual-Function Cracking Catalyst Mixtures, Ch. 12, Fluid Catalytic Cracking, ACS Symposium Series 375, American Chemical Society, Washington, D.C., 1988.

Some regenerator temperature control is possible by adjusting the CO/CO₂ ratio produced in the regenerator. Burning coke partially to CO produces less heat than complete combustion to CO₂. Control of CO/CO₂ ratios is fairly straightforward in single, bubbling bed regenerators, by limiting the amount of air that is added. It is far more difficult to control CO/CO₂ ratios when multi-stage regeneration is involved.

U.S. Patent No. 4,353,812 to Lomas et al discloses cooling catalyst from a regenerator by passing it through the shell side of a heat-exchanger with a cooling medium being passed through the tube side. This approach will remove heat from the regenerator, but will not prevent poorly, or even well, stripped catalyst from experiencing very high surface or localized temperatures in the regenerator.

The prior art also uses dense or dilute phase regenerated fluid catalyst heat removal zones or heat-exchangers that are remote from, and external to, the regenerator vessel to cool hot regenerated catalyst for return to the regenerator. Examples of such processes are found in U.S. Patent Nos. 2,970,117 to Harper; 2,873,175 to Owens; 2,862,798 to McKinney; 2,596,748 to Watson et al; 2,515,156 to Jahnig et al; 2,492,948 to Berger; and 2,506,123 to Watson.

### NOx

Burning of nitrogenous compounds in FCC regenerators has long led to creation of minor amounts of NOx, which in the past was emitted with the regenerator flue gas. Usually these emissions were not much of a problem because of relatively low temperature, a relatively reducing atmosphere from partial combustion of CO and the absence of catalytic metals like Pt in the regenerator which increase NOx production.

Unfortunately, the trend to heavier feeds usually means that the amount of nitrogen compounds on the coke will increase and that NOx emissions will increase. Higher regenerator temperatures also tend to increase NOx emissions. It would be beneficial, in many refineries, to have a way to burn at least a large portion of the nitrogenous coke in a relatively reducing atmosphere, so that much of the NOx formed could be converted into N₂ within the regenerator. Unfortunately, existing multi-stage regenerator designs can not be run with two stages of regeneration, both operating with partial CO combustion, i.e., with a reducing atmosphere.

### High Efficiency Regenerator

Most new FCC units use a high efficiency regenerator, which uses a fast fluidized bed coke combustor to burn most of the coke from the catalyst, and a dilute phase transport riser above the coke combustor to afterburn CO to CO₂ and achieve a limited amount of additional coke combustion. Hot regenerated catalyst and flue gas from the coke combustor are discharged from the transport riser, separated, and the regenerated catalyst collected as a second, bubbling dense bed for return to the FCC reactor and recycle to the coke combustor to heat up incoming spent catalyst.

Such regenerators are now widely used. They typically are operated to achieve complete CO combustion within the dilute phase transport riser. They achieve one stage of regeneration, i.e., essentially all of the coke is burned in the coke combustor, with minor amounts being burned in the transport riser. The residence time of the catalyst in the coke combustor is on the order of a few minutes, while the residence time in the transport riser is on the order of a few seconds, so there is generally not enough residence time of catalyst in the transport riser to achieve any significant amount of coke combustion.

Catalyst regeneration in such high efficiency regenerators is essentially a single stage process in that the catalyst and regeneration gas and produced flue gas remain together from the coke combustor through the dilute phase transport riser. Almost no further regeneration of catalyst occurs downstream of the coke combustor, because very little air is added to the second, bubbling dense bed used to collect regenerated catalyst for recycle to the reactor or the coke combustor. Usually enough air is added to fluff the catalyst, and allow efficient transport of catalyst around the bubbling dense bed. Less than 5 %, and usually less than 1 %, of the coke combustion takes place in the second dense bed.

Such units are popular in part because of their efficiency, i.e., the fast fluidized bed, with recycle of hot regenerated catalyst, is so efficient at burning coke that the regenerator can operate with only half the catalyst inventory required in an FCC unit with a bubbling dense bed regenerator.

With the trend to heavier feedstocks, the catalyst regenerator is frequently pushed to the limit of its coke burning capacity. Addition of cooling coils, as discussed above in the Temperature discussion, provides some help, but causes additional problems. High efficiency regenerators run best when operated in complete CO combustion mode, so attempts to shift some of the heat of combustion to a downstream CO boiler are difficult to implement.

The use of a high efficiency regenerator to achieve staged catalyst regeneration will allow some reduction in NOx emissions, while some recovery of SOx will still be possible. Other benefits also flow from multistage operation, such as reduced steaming of catalyst, because of lower average temperatures, and less damage from metals, because at least some of the regeneration is conducted in a somewhat reducing atmosphere which retards formation of highly oxidized forms of vanadium. One such regenerator is disclosed in US 4,849,091, which keeps the air supply to the coke combustor constant, and changes the air supply to the second dense bed based on a dilute phase temperature, which indicates afterburning. There is only partial combustion of coke and CO in the coke combustor, with relatively complete coke and CO combustion in the second dense bed. The reducing flue gas from the coke combustor (with a CO2/CO ratio of 0.7 to 2.0) is combined with the flue gas from the second dense bed, which operates with substantially complete CO combustion to produce a flue gas with at least 0.5% O₂. The two flue gas streams are combined to form flue gas containing a CO₂/CO ratio from 1 to 5.

The present invention seeks to provide an improved process for effecting high efficiency multi-stage regeneration of spent FCC catalyst in which changes in coke make are dealt with either by changing the coke burning rates in both the coke combustor and the second dense bed, or at least in the coke combustor. This is a preferred arrangement because the coke combustor is the most vigorously fluidized, and most robust place in the regenerator for coke combustion. The fast fluidized bed region is not plagued by the presence of many large bubbles, unlike the second dense bed of many high efficiency regenerators. The fast fluidized bed region is essentially entirely active, while much, and perhaps even a majority, of a bubbling dense phase fluidized bed is inactive. For these reasons, it is preferable to keep the operation of the second stage of regeneration relatively constant, while adjusting coke burning in the fast fluidized bed coke combustor.

Accordingly, the present invention resides in a process for regenerating spent fluidized catalytic cracking catalyst comprising the steps of:
a) partially regenerating said spent cracking catalyst in a primary regeneration zone, comprising a fast fluidized bed coke combustor and a superimposed dilute phase transport riser, by charging said spent catalyst to said fast fluidized bed coke combustor having an inlet for spent catalyst, an inlet for recycled regenerated catalyst and an inlet for primary regeneration gas, to produce partially regenerated catalyst and flue gas comprising at least 1.0 mole % CO, which are passed up into the dilute phase transport riser and discharged therefrom to form a flue gas rich stream comprising at least 1 mole % CO and a catalyst rich stream comprising partially regenerated catalyst; and
b) completing the regeneration of said partially regenerated catalyst in a secondary regeneration zone comprising a second fluidized bed adapted to receive said partially regenerated catalyst and having means for adding additional regeneration gas to said second fluidized bed in an amount sufficient to complete the regeneration of said catalyst and produce regenerated catalyst and secondary flue gas; wherein:
   i) the CO-containing flue gas stream from the said dilute phase transport riser is combined with said secondary flue gas to produce a combined flue gas stream;
   ii) the conditions in said secondary regeneration zone are controlled such that said secondary flue gas contains less than 1 mole % CO and contains sufficient oxygen to react with the CO-containing flue gas stream from the said dilute transport riser;
   iii) at least one flue gas composition or a differential temperature in said combined flue gas stream is monitored; and
   iv) the amount of primary regeneration gas supplied to said fast fluidized bed coke combustor is controlled so as to maintain constant said monitored flue gas composition or differential temperature.

The invention will now be more particularly described with reference to the accompanying drawings, in which:
Figure 1 is a simplified schematic view of one example of the invention using flue gas composition, or a delta T indicating afterburning, to control air addition to the coke combustor of a multistage FCC high efficiency regenerator.
Figure 2 is a simplified view of the same regenerator using a flue gas analyzer, or temperature, to control total air flow, and a fluid bed dT controller to apportion air between the fluidized beds.
Figure 3 shows the same regenerator wherein a flue gas analyzer controller, and/or a delta T controller, changes feed preheat and/or feed rate.

Referring to the drawings, the FCC reactor section in each example is the same and includes a riser reactor 4, into the lower end of which a heavy feed is charged via line 1. Hot regenerated catalyst is added to the reactor 4 via standpipe 102 and control valve 104 to mix with the feed. Preferably, some atomizing steam is added via line 141 to the base of the riser, usually with the feed. With heavier feeds, e. g. , a resid, 2-10 wt.% steam may be used. A hydrocarbon-catalyst mixture rises as a generally dilute phase through riser 4. Cracked products and coked catalyst are discharged via riser effluent conduit 6 into first stage cyclone 8 in vessel 2. The riser top temperature, the temperature in conduit 6, ranges between 480 and 615°C (900 and 1150°F), and preferably between 538 and 595°C (1000 and 1050° F). The riser top temperature is usually controlled by adjusting the catalyst to oil ratio in riser 4 or by varying feed preheat.

Cyclone 8 separates most of the catalyst from the cracked products and discharges the separated catalyst via dipleg 12 to a stripping zone 30 located in a lower portion of vessel 2. Vapor and minor amounts of catalyst exit cyclone 8 via gas effluent conduit 20 and second stage reactor cyclones 14. The second stage cyclones 14 recover some additional catalyst which is discharged via diplegs to the stripping zone 30.

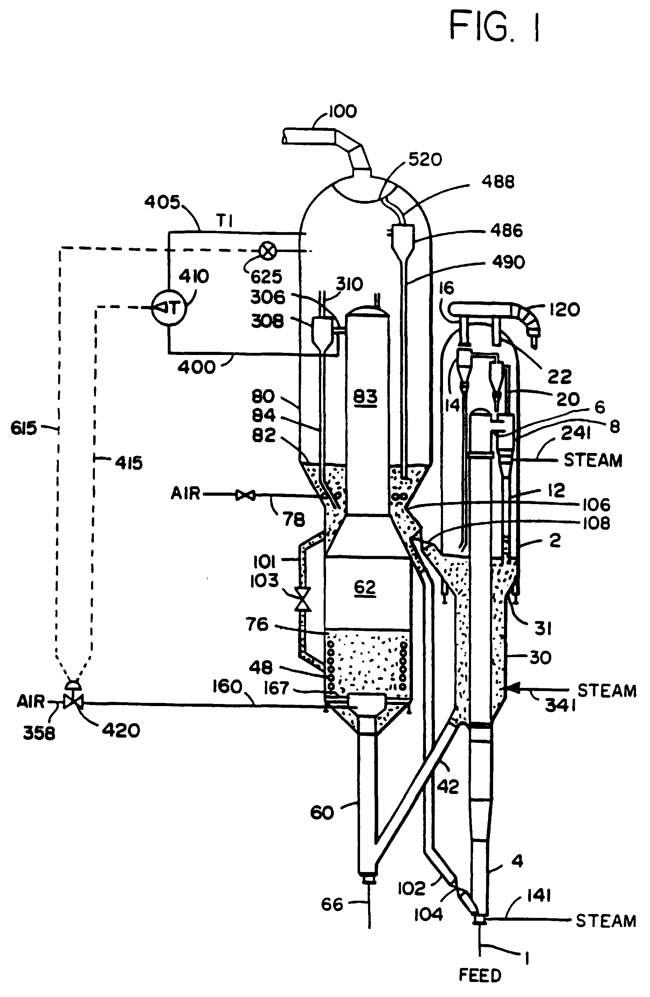

The second stage cyclone overhead stream, cracked products and catalyst fines, pass via effluent conduit 16 and line 120 to product fractionators not shown in Figure 1. Stripping vapors enter the atmosphere of the vessel 2 and may exit this vessel via outlet line 22 or by passing through an annular opening in line 20, not shown, i.e. the inlet to the secondary cyclone can be flared to provide a loose slip fit for the outlet from the primary cyclone.

The coked catalyst discharged from the cyclone diplegs collects as a bed of catalyst 31 in the stripping zone 30. Dipleg 12 is sealed by being extended into the catalyst bed 31, whereas the dipleg from the secondary cyclones 14 is sealed by a flapper valve, not shown.

Many cyclones, 4 to 8, are usually used in each cyclone separation stage. A preferred closed cyclone system is described in U.S. Patent No. 4,502,947 to Haddad et al.

Stripper 30 is a "hot stripper" in that spent catalyst is mixed and heated in bed 31 by hot catalyst from the regenerator. Catalyst from regenerator 80 enters vessel 2 via transfer line 106, and slide valve 108 which controls catalyst flow. Adding hot, regenerated catalyst permits first stage stripping at from 55°C (100°F) above the riser top temperature up to a temperature of 816°C (1500°F). Preferably, the first stage stripping zone operates at at least 83°C (150°F) above the riser top temperature, but below 760°C (1400°F).

In bed 31 a stripping gas, preferably steam, flows countercurrent to the catalyst. The stripping gas is preferably introduced into the lower portion of bed 31 by one or more conduits 341. The stripping zone bed 31 preferably contains trays or baffles not shown.

High temperature stripping removes coke, sulfur and hydrogen from the spent catalyst. Coke is removed because carbon in the unstripped hydrocarbons is burned as coke in the regenerator. The sulfur is removed as hydrogen sulfide and mercaptans. The hydrogen is removed as molecular hydrogen, hydrocarbons, and hydrogen sulfide. The removed materials also increase the recovery of valuable liquid products, because the stripper vapors can be sent to product recovery with the bulk of the cracked products from the riser reactor. High temperature stripping can reduce coke load to the regenerator by 30 to 50% or more and remove 50-80% of the hydrogen and 35 to 55% of the sulfur, as well as a portion of nitrogen as ammonia and cyanides.

Although a hot stripping zone is shown in Figure 1, the present invention may also be used with conventional strippers, or with long residence time steam strippers, or with strippers having internal or external heat exchange means.

Although not shown in Figure 1, an internal or external catalyst stripper/cooler, with inlets for hot catalyst and fluidization gas, arid outlets for cooled catalyst and stripper vapor, may also be used where desired to cool the stripped catalyst before it enters the regenerator 80.

The regenerator 80 comprises two regeneration stages, that is a first coke combustor 62/transport riser 83 and a second fluidized bed 82, which is preferably a dense bed or bubbling fluidized bed. Partial CO combustion is maintained in the first stage while the second stage of catalyst regeneration operates in complete CO combustion mode.

The stripped catalyst passes through a conduit 42 into regenerator riser 60, where air from line 66 and stripped catalyst combine and pass up through an air catalyst disperser 74 into coke combustor 62. A fast fluidized bed 76 of catalyst is thereby produced in the coke combustor so that combustible materials, such as coke on the catalyst, are burned by contact with air or oxygen containing gas.

The amount of air or oxygen containing gas added via line 66, to the base of the riser mixer 60, is preferably constant and preferably restricted to 10-95% of the total air addition to the first stage of regeneration. Additional air, preferably 5-50 % of total air, is added to the coke combustor via line 160 and air ring 167. The partitioning of the first stage air, between the riser mixer 60 and the air ring 167 in the coke combustor, can be fixed or controlled by a differential temperature, e.g., the temperature rise in riser mixer 60. The total amount of air addition to the first stage, i.e., the regeneration in the coke combustor and riser mixer is controlled to maintain only partial coke removal and only partial CO combustion, so that the CO content of the first stage flue gas is in excess of 1 mole%. The control method will be discussed in more detail later.

The temperature of fast fluidized bed 76 in the coke combustor 62 may be, and preferably is, increased by recycling some hot regenerated catalyst from the second fluidized bed 82 via line 101 and control valve 103. If temperatures in the coke combustor are too high, some heat can be removed via catalyst cooler 48, shown as tubes immersed in the fast fluidized bed in the coke combustor. Very efficient heat transfer can be achieved in the fast fluidized bed 76, so it may be beneficial to both heat the coke combustor (by recycling hot catalyst to it) and to cool the coke combustor (by using catalyst cooler 48) at the same time.

In coke combustor 62, the combustion air, regardless of whether added via line 66 or 160, fluidizes the catalyst in bed 76, and subsequently transports the catalyst continuously as a dilute phase through the regenerator riser 83. The dilute phase passes upwardly through the riser 83, through riser outlet 306 into primary regenerator cyclone 308. Catalyst is discharged down through dipleg 84 to form a second relatively dense bed of catalyst 82 located within the regenerator 80.

While most of the catalyst passes down through the dipleg 84, the flue gas and some catalyst pass via outlet 310 into the dilute phase region above the second fluidized bed. An additional stage of separation of catalyst from the combined flue gas flue gas streams is achieved in secondary cyclone 486, with catalyst recovered via dipleg 490 and flue gas discharged via gas exhaust line 488 to plenum 520. Flue gas, with a greatly reduced solids content is discharged from the regenerator 80 via line 100.

The hot, regenerated catalyst discharged from the various cyclones forms the second fluidized bed 82, which is hotter than any other fluid bed in the regenerator, and hotter than the stripping zone 30. Bed 82 is at least 55°C (100°F), and preferably at least 83°C (150°F), hotter than stripping zone 31. The regenerator temperature is preferably no more than 870°C (1600°F) to prevent deactivating the catalyst. Preferably, some hot regenerated catalyst is withdrawn from dense bed 82 and passed via line 106 and control valve 108 into dense bed of catalyst 31 in stripper 30. Hot regenerated catalyst passes through line 102 and catalyst flow control valve 104 for use in heating and cracking of fresh feed.

Partial CO combustion is achieved in the first regeneration stage 62, 83 by control of temperature and residence time and by control of the air addition rate. There will always be large amounts of coke on catalyst exiting the riser. Combustion air to the second stage is maintained at a constant rate, or changed only infrequently to suit changing conditions. The second stage flue gas, e.g., CO or O2 content controls the amount of air added to the first stage 62, 83.

In the Fig 1 embodiment, air addition to the coke combustor 62 is controlled by a delta T controller 410 which is connected to thermocouples 400 and 405 in the outlet to the transport riser and the dilute phase region above the second fluidized bed respectively. The output from the controller 410 is sent via control line 415 to alter air flow through valve 420 which supplies air to the coke combustor via line 160. The air flow via line 78 to the upper dense bed is fixed, i.e., a conventional control means admits a fixed volume of air.

If the CO content of the second stage flue gas increases above 1 mole % CO, or a lower preset maximum CO concentration, in response to a major change in feed characteristics or operating conditions, this means that the second fluidized bed is not able to completely afterburn all the CO produced in the second fluidized bed. The delta T observed by the thermocouples 400, 405 will drop and the dT controller 410 send a signal to the valve 420 to increase the air supply to the coke combustor 62. If second stage flue gas CO content decreases, e.g., to 0.05 mole %, or too much oxygen breaks through the second stage, this means the second stage is not being worked hard enough, so the amount of air added to the first stage will be decreased to shift more of the coke burning load to the second stage of regeneration.

In an alternative embodiment, shown by the broken lines in Figure 1, a flue gas analyzer 625 is used in place of the dT controller 410 to measure the composition of the flue gas from the second regeneration stage. The flue gas analyzer 625 sends a signal via signal transmission means 615 to valve 420 to control air flow to the coke combustor.

The embodiment shown in Figure 1 provides a relatively simple and reliable control scheme (use of a flue gas composition or delta T indicative of a composition of flue gas above the second fluidized bed) which can accommodate normal minor changes in operation, and even be adjusted to deal with major changes in operation.

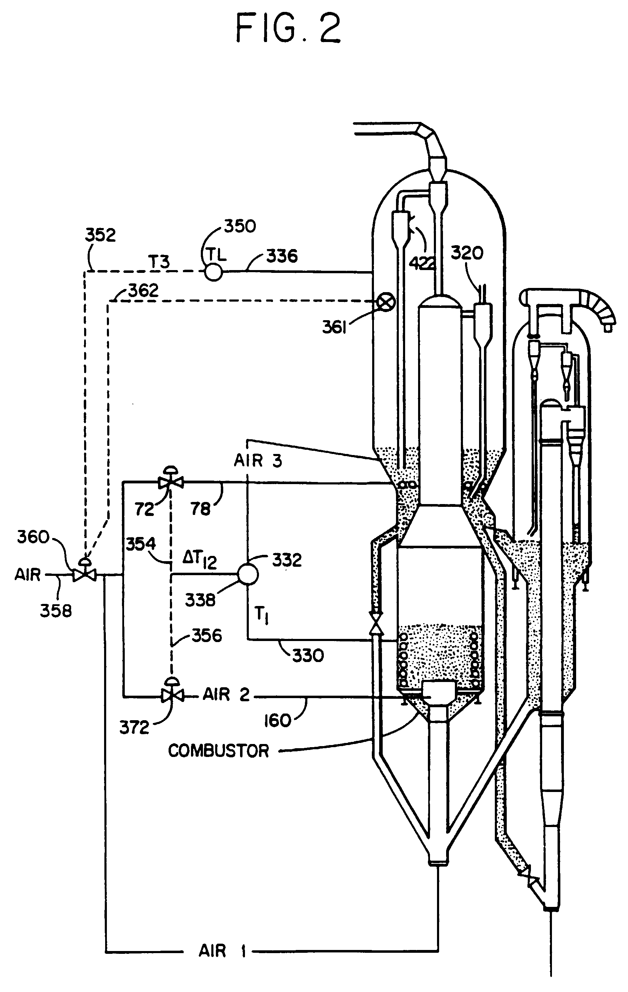

It will be beneficial in many refineries if the relatively large amount of coke burning in both the primary and secondary stage of the regenerator can be directly controlled. The Fig. 2 embodiment provides a way to apportion and control the relative amount of coke burning that occurs in each stage of regeneration.

The Fig. 2 embodiment uses most of the hardware from the Fig. 1 embodiment, i.e., the regenerator flue gas streams are combined into a single flue gas stream. The difference in the Fig. 2 embodiment is simultaneous adjustment of both primary and secondary air. This can be seen more easily in conjunction with a review of Figure 2. Elements which correspond to Fig. 1 elements have the same reference numerals, and are not discussed. Fig 2 also includes, besides reference numerals, symbols indicating temperature differences, e.g., dT₁₂ means that a signal is developed indicative of the temperature difference between temperature 1 and temperature 2.

The amount of air added to the riser mixer is fixed, for simplicity, but this is merely to simplify the following analysis. The riser mixer air is merely part of the primary air, and could vary with any variations in flow of air to the coke combustor. It is also possible to operate the regenerator with no riser mixer at all, in which case spent catalyst, recycled regenerated catalyst, and primary air are all added directly to the coke combustor. The riser mixer is, however, preferred.

The control scheme will first be stated in general terms, then reviewed in conjunction with Fig. 2. The overall amount of combustion air, i.e., the total air to the regenerator, is controlled based on either the composition or temperature of the combined flue gas or a differential temperature indicating afterburning downstream of the second fluidized bed. Controlling or apportioning the air added to each combustion zone allows unit operation to be optimized even when the operator does not know the individual optima for the first and second stages. If the second fluidized bed, typically a bubbling dense bed with fairly poor contacting efficiency, is being called on to do too much afterburning, an increased dT in the flue gas, will occur. The unit can be controlled by increasing the air rate to the coke combustor and decreasing air flow to the second dense bed, and letting the controller keep the relative amount of coke burned in the first and second stages constant regardless of future fluctuations in coke make.

In the Fig. 2 embodiment, the control scheme apportions air between the first and second stages of the regenerator. This is a more complicated control method than was used in Figure 1, but will usually allow better operation. An operator may specify e.g., that 40 % of the coke will be burned in the first stage and 60 % burned in the second stage, regardless of fluctuations in coke make. Several control loops are needed, basically at least one loop to control total air addition to the regenerator based on a measurement of the flue gas from the unit, and one loop to shift air between the first and second stage to keep the relative amounts of coke combustion in each stage constant.

The total air flow in line 358 is controlled by means of a flue gas analyzer 361 or preferably by temperature controller 350 and thermocouple 336 which are in the dilute phase region above the second fluidized bed. Either temperature or flue gas composition can be used to generate a control signal which is transmitted via transmission means 352 or 362 (an air line, or a digital or analogue electrical signal or equivalent signal transmission means) to valve 360 which regulates the total air flow to the regenerator via line 358.

The apportionment of air between the primary and secondary stages of regeneration is controlled by the differences in temperature of the two relatively dense phase beds in the regenerator. The temperature (T1) in the coke combustor fast fluidized bed is determined by thermocouple 330. The bubbling dense bed temperature (T2) is determined by thermocouple 332. Both temperature signals are sent to differential temperature controller 338, which generates a signal based on dT12, or the difference in temperature between the two beds. Signals are sent via means 356 to valve 372, which regulates primary air to the coke combustor and via means 354 to valve 72, which regulates secondary air to bubbling dense bed.

If the delta T (dT12) becomes too large, it means that not enough coke burning is taking place in the coke combustor, and too much coke burning is occurring in the second dense bed. The dT controller 338 will compensate by sending more combustion air to the coke combustor, and less to the bubbling dense bed.

There are several other temperature control points which can be used besides the ones shown. Thus the operation of the coke combustor can be measured by the fast fluidized bed temperature (as shown), by the temperature in the dilute phase of the coke combustor or in the dilute phase transport riser, or the temperature measured in the primary cyclone or on a flue gas stream or catalyst stream discharged from the primary cyclone. A flue gas or catalyst composition measurement can also be used to generate a signal indicative of the amount of coke combustion occurring in the fast fluidized bed, but this will generally not be as sensitive as simply measuring the bed temperature in the coke combustor.

The designations "primary air" and "secondary air" do not require that a majority of the coke combustion take place in the coke combustor. In most instances, the fast fluidized bed region will be the most efficient place to burn coke, but there are considerations, such as reduced steaming of catalyst if regenerated in the bubbling dense bed, and reduced thermal deactivation of catalyst by delaying as long as possible as much of the carbon burning as possible, which may make it beneficial to burn most of the coke with the "secondary air". This will usually require substantial unit modifications, to increase the size of the second fluidized bed, and to increase the bed superficial vapor velocity so that better fluidization is achieved.

It is possible to magnify or to depress the difference in temperature between the coke combustor and the bubbling dense bed by changing the amount of hot regenerated catalyst which is recycled. Operation with large amounts of recycle, i.e., recycling more than 1 or 2 weights of catalyst from the bubbling dense bed per weight of spent catalyst, will depress temperature differences between the two regions. Differential temperature control can still be used, but the gain and/or setpoint on the controller may have to be adjusted because recycle of large amounts of catalyst from the second dense bed will increase the temperature in the fast fluidized bed coke combustor.

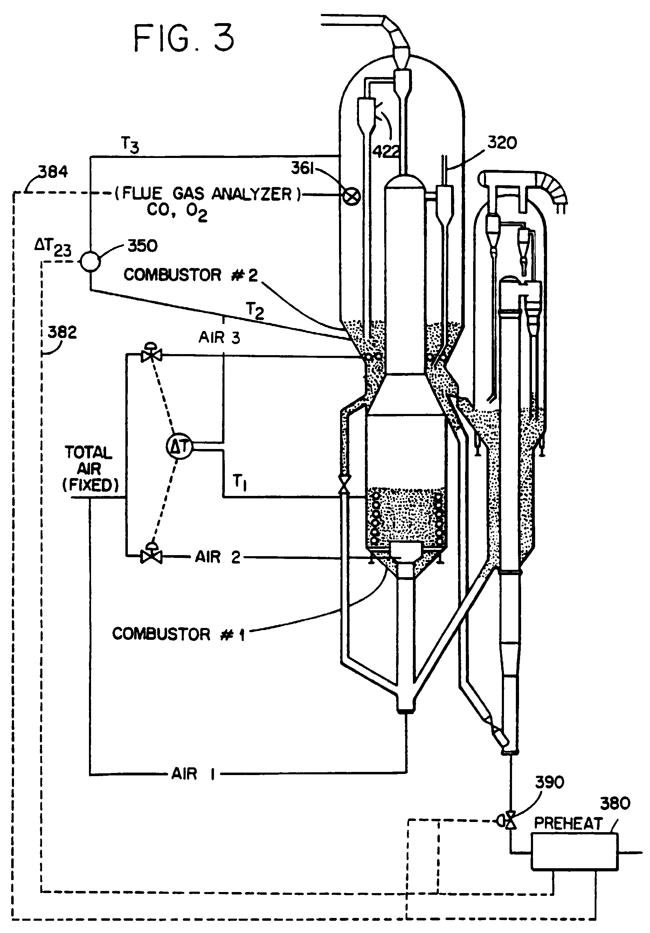

The control method of Fig. 2. will be preferred for most refineries. Another method of control is shown in Fig. 3, which can be used as an alternative to the Fig. 2 method. The Fig. 3 control method retains the ability to apportion combustion air between the primary and secondary stages of regeneration, but adjusts feed preheat, and/or feed rate, rather than total combustion air, to maintain partial CO combustion in the coke combustor and complete CO combustion in the second fluidized bed. The Fig. 3 control method is especially useful where a refiner's air blower capacity is limiting the throughput of the FCC unit. Leaving the air blower at maximum, and adjusting feed preheat and/or feed rate, will maximize the coke burning capacity of the unit by always running the air blower at maximum throughput.

In the Fig. 3 embodiment, the total amount of air added via line 358 is controlled solely by the capacity of the compressor or air blower. The apportionment of air between primary and secondary stages of combustion is controlled as in the Fig. 2 embodiment, except that a flue gas dT, rather than a flue gas temperature, is used to adjust coke make. Feed preheat and/or feed rate are adjusted as necessary to keep the coke make in balance with the coke burned in the first stage (partial CO combustion) and in the second stage (complete CO combustion). Each variable changes the coke make of the unit, and each will be reviewed in more detail below.

Feed preheat can control afterburning because of the way FCC reactors are run. The FCC reactor usually operates with a controlled riser top temperature. The hydrocarbon feed in line 1 is mixed with sufficient hot, regenerated catalyst from line 102 to maintain a given riser top temperature. This is the way most FCC units operate. The temperature can be measured at other places in the reactor, as in the middle of the riser, at the riser outlet, cracked product outlet, or a spent catalyst temperature before or after stripping, but usually the riser top temperature is used to control the amount of catalyst added to the base of the riser to crack fresh feed. If the feed is preheated to a very high temperature, and much or all of the feed is added as a vapor, less catalyst will be needed as compared to operation with a relatively cold liquid feed which is vaporized by hot catalyst. High feed preheat reduces the amount of catalyst circulation needed to maintain a given riser top temperature, and this reduced catalyst circulation rate reduces coke make. A constant air supply and a reduced coke make, regardless of the reason for the reduction in coke make, will increase the O2 content of the flue gas.

If the O2 content of the flue gas above the bubbling dense bed increases (or if CO content drops) a composition based control signal from analyzer controller 361 may be sent via signal transmission means 384 to feed preheater 380 or to valve 390. Decreasing feed preheat, i.e., a cooler feed, increases coke make. Increasing feed rate increases coke make. Either action, or both together, will increase the coke make, and bring flue gas composition back to the desired point. A differential temperature control 350 may generate an analogous signal, transmitted via means 382 to adjust preheat and/or feed rate.

The air is apportioned between the first and second stages as in the Fig. 2 embodiment, i.e., a dT controller maintains a temperature difference, which indirectly sets the amount of coke burned in each stage.

The Fig. 3 embodiment provides a good way to accommodate unusually bad feeds, with CCR levels exceeding 5 or 10 wt %. Partial CO combustion, with downstream combustion of CO, in a CO boiler, and constant maximum air rate maximize the coke burning capacity of the regenerator using an existing air blower of limited capacity.

A number of mechanical modifications may be made to the high efficiency regenerator without departing from the scope of the present invention. It is possible to use the control scheme of the present invention even when additional catalyst/flue gas separation means are present. As an example, the riser mixer 60 may discharge into a cyclone or other separation means contained within the coke combustor. The resulting flue gas may be separately withdrawn from the unit, without entering the dilute phase transport riser. Such a regenerator configuration is shown in EP-A-0259115, published on March 9, 1988.

Now that the invention has been reviewed in connection with the embodiments shown in the Figures, a more detailed discussion of the different parts of the process and apparatus of the present invention follows. Many elements of the present invention can be conventional, such as the cracking catalyst, or are readily available from vendors, so only a limited discussion of such elements is necessary.

### FCC Feed

Any conventional FCC feed can be used. The process of the present invention is especially useful for processing difficult charge stocks, those with high levels of CCR material, exceeding 2, 3, 5 and even 10 wt % CCR. The process tolerates feeds which are relatively high in nitrogen content, and which otherwise might produce unacceptable NOx emissions in conventional FCC units, operating with complete CO combustion.

The feeds may range from the typical, such as petroleum distillates or residual stocks, either virgin or partially refined, to the atypical, such as coal oils and shale oils. The feed frequently will contain recycled hydrocarbons, such as light and heavy cycle oils which have already been subjected to cracking.

Preferred feeds are gas oils, vacuum gas oils, atmospheric resids, and vacuum resids. The present invention is most useful with feeds having an initial boiling point above 343°C (650°F).

### FCC Catalyst

Any commercially available FCC catalyst may be used. The catalyst can be 100% amorphous, but preferably includes some zeolite in a porous refractory matrix such as silica-alumina, clay, or the like. The zeolite is usually 5-40 wt.% of the catalyst, with the rest being matrix. Conventional zeolites include X and Y zeolites, with ultra stable, or relatively high silica Y zeolites being preferred. Dealuminized Y (DEAL Y) and ultrahydrophobic Y (UHP Y) zeolites may be used. The zeolites may be stabilized with Rare Earths, e.g., 0.1 to 10 Wt % RE.

Relatively high silica zeolite containing catalysts are preferred for use in the present invention. They withstand the high temperatures usually associated with complete combustion of CO to CO2 within the FCC regenerator.

The catalyst inventory may also contain one or more additives, either present as separate additive particles or mixed in with each particle of the cracking catalyst. Additives can be added to enhance octane (shape selective zeolites, i.e., those having a Constraint Index of 1-12, preferably ZSM-5), adsorb SOX (alumina), and remove Ni and V (Mg and Ca oxides).

### FCC Reactor Conditions

Conventional FCC reactor conditions may be used. The reactor may be either a riser cracking unit or dense bed unit or both. Riser cracking is highly preferred. Typical riser cracking reaction conditions include catalyst/oil ratios of 0.5:1 to 15:1 and preferably 3:1 to 8:1, and a catalyst contact time of 0.5-50 seconds, and preferably 1-20 seconds.

It is preferred, but not essential, to use an atomizing feed mixing nozzle in the base of the riser reactor.

It is preferred, but not essential, to have a riser acceleration zone in the base of the riser, as shown in Figures 1 and 2.

It is preferred, but not essential, to have the riser reactor discharge into a closed cyclone system for rapid and efficient separation of cracked products from spent catalyst. A preferred closed cyclone system is disclosed in US 4,502,947 to Haddad et al.

It is preferred but not essential, to rapidly strip the catalyst, immediately after it exits the riser, and upstream of the conventional catalyst stripper. Stripper cyclones disclosed in US 4,173,527, Schatz and Heffley, may be used.

It is preferred, but not essential, to use a hot catalyst stripper. Hot strippers heat spent catalyst by adding some hot, regenerated catalyst to spent catalyst. The hot stripper reduces the hydrogen content of the spent catalyst sent to the regenerator and reduces the coke content as well. Thus, the hot stripper helps control the temperature and amount of hydrothermal deactivation of catalyst in the regenerator. A good hot stripper design is shown in US 4,820,404 Owen.

### Catalyst Regeneration

The process and apparatus of the present invention can use many conventional elements most of which are conventional in FCC regenerators.

The present invention uses as its starting point a high efficiency regenerator such as is shown in the Figures. The essential elements of such a regenerator include a coke combustor, a dilute phase transport riser and a second fluidized bed, which is usually a bubbling dense bed. The second fluidized bed can also be a turbulent fluidized bed, or even another fast fluidized bed, but unit modifications will then frequently be required. Preferably, a riser mixer is used. These elements are generally known.

Preferably there is quick separation of catalyst from steam laden flue gas exiting the regenerator transport riser. A significantly increased catalyst inventory in the second fluidized bed of the regenerator, and means for adding a significant amount of combustion air for coke combustion in the second fluidized bed are preferably present or added.

Each part of the regenerator will be briefly reviewed below, starting with the riser mixer and ending with the regenerator flue gas cyclones.

Spent catalyst and some combustion air are charged to the riser mixer 60. Some regenerated catalyst, recycled through the catalyst stripper, will usually be mixed in with the spent catalyst. Some regenerated catalyst may also be directly recycled to the base of the riser mixer 60, either directly or, preferably, after passing through a catalyst cooler. Riser mixer 60 is a preferred way to get the regeneration started. The riser mixer typically burns most of the fast coke (probably representing entrained or adsorbed hydrocarbons) and a very small amount of the hard coke. The residence time in the riser mixer is usually very short. The amount of hydrogen and carbon removed, and the reaction conditions needed to achieve this removal are reported below.

| RISER MIXER CONDITIONS | | | | |
|---|---|---|---|---|
| | | Good | Preferred | Best |
| Inlet Temp. | °F | 900-1200 | 925-1100 | 950-1050 |
| | °C | 480- 650 | 500- 595 | 510- 565 |
| Temp. Increase, | °F | 10- 200 | 25- 150 | 50- 100 |
| | °C | 5- 110 | 15- 85 | 30 - 55 |
| Catalyst Residence Time, Seconds | | 0.5-30 | 1 - 25 | 1.5-20 |
| Vapor velocity, | fps | 5- 100 | 7 - 50 | 10 - 25 |
| | m/s | 1.5-30 | 2.1-15 | 3 - 7.5 |
| % total air added | | 1 - 25 | 2 - 20 | 3 - 15 |
| H2 Removal, % | | 5 - 40 | 10 -35 | 12 - 30 |
| Carbon Removal, % | | 1 - 10 | 2 - 8 | 3 - 7 |

Although operation with a riser mixer is preferred, it is not essential, and in many units is difficult to implement because there is not enough elevation under the coke combustor in which to fit a riser mixer. Spent, stripped catalyst may be added directly to the coke combustor, discussed next.

The coke combustor 62 contains a fast fluidized dense bed of catalyst. It is characterized by relatively high superficial vapor velocity, vigorous fluidization, and a relatively low density dense phase fluidized bed. Most of the coke can be burned in the coke combustor. The coke combustor will also efficiently burn "fast coke", primarily unstripped hydrocarbons, on spent catalyst. When a riser mixer is used, a large portion, perhaps most, of the "fast coke" will be removed upstream of the coke combustor. If no riser mixer is used, relatively easy job of burning the fast coke will be done in the coke combustor.

The removal of hydrogen and carbon achieved in the coke combustor alone (when no riser mixer is used) or in the combination of the coke combustor and riser mixer, is presented below. The operation of the riser mixer and coke combustor can be combined in this way, because what is important is that catalyst leaving the coke combustor have specified amounts of carbon and hydrogen removed.

| COKE COMBUSTOR CONDITIONS | | | | |
|---|---|---|---|---|
| | | Good | Preferred | Best |
| Dense Bed Temp. | °F | 900-1300 | 925-1275 | 950-1250 |
| | °C | 400- 700 | 500- 690 | 510- 680 |
| Catalyst Residence Time, Seconds | | 10- 500 | 20- 240 | 30- 180 |
| Vapor velocity, | fps | 1- 40 | 2 - 20 | 3.5-15 |
| | m/s | 0.3-12 | 0.6- 6 | 1 - 4.5 |
| % primary air added | | 40- 100 | 50 - 98 | 60 - 95 |
| % total air added | | 30 - 95 | 35 - 90 | 40 - 80 |
| H2 Removal, % | | 40 - 98 | 45 - 95 | 50 - 90 |
| Carbon Removal, % | | 25 - 95 | 30 - 90 | 35 - 75 |

The dilute phase transport riser 83 forms a dilute phase which efficiently transfers catalyst from the fast fluidized bed through a catalyst separation means to the second dense bed.

Additional air can be added to the dilute phase transport riser, but usually it is better to add the air lower down in the regenerator, and speed up coke burning rates.

| TRANSPORT RISER CONDITIONS | | | | |
|---|---|---|---|---|
| | | Good | Preferred | Best |
| Inlet Temp. | °F | 900-1300 | 925-1275 | 950-1250 |
| | °C | 400- 700 | 500- 690 | 510- 680 |
| Outlet Temp. | °F | 925-1450 | 975-1400 | 1000-1350 |
| | °C | 500- 790 | 25- 760 | 540- 730 |
| Catalyst Residence Time, Seconds | | 1 - 60 | 2 - 40 | 3 - 30 |
| Vapor velocity, | fps | 6 - 50 | 9 - 40 | 10 - 30 |
| | c/s | 2 - 15 | 3- -12 | 3 - 9 |
| % total air in | | 0 - 30 | 0 - 20 | 0 - 5 |
| H2 Removal, % | | 0 - 20 | 1 - 15 | 2 - 10 |
| Carbon Removal, % | | 0 - 15 | 1 - 10 | 2 - 5 |

Rapid separation of flue gas from catalyst exiting the dilute phase transport riser is still the preferred way to operate the unit. This flue gas stream contains a fairly large amount of steam, from adsorbed stripping steam entrained with the spent catalyst and from water of combustion. Many FCC regenerators operate with 35-70 kPa (5-10 psia) steam partial pressure in the flue gas. In the process of the present invention, the dilute phase mixture is preferably quickly separated into a catalyst rich dense phase and a catalyst lean dilute phase.

The quick separation of catalyst and flue gas sought in the regenerator transport riser outlet is very similar to the quick separation of catalyst and cracked products sought in the riser reactor outlet.

The most preferred separation system effects discharge of the regenerator transport riser dilute phase into a closed cyclone system such as that disclosed in US 4,502,947. Such a system rapidly and effectively separates catalyst from steam laden flue gas and isolates and removes the flue gas from the regenerator vessel. This means that catalyst in the regenerator downstream of the transport riser outlet will be in a relatively steam free atmosphere, and the catalyst will not deactivate as quickly as in prior art units.

Other methods of effecting a rapid separation of catalyst from steam laden flue gas may also be used, but most of these will not work as well as the use of closed cyclones. Acceptable separation means include a capped riser outlet discharging catalyst down through an annular space defined by the riser top and a covering cap. In older FCC's a reasonably efficient multistage regeneration of catalyst can be achieved by reducing the air added to the coke combustor and increasing the air added to the second fluidized bed. The reduced vapor velocity in the transport riser, and increased vapor velocity immediately above the second fluidized bed, will more or less segregate the flue gas from the transport riser from the flue gas from the second fluidized bed.

In a preferred embodiment, the transport riser outlet may be capped with radial arms, not shown, which direct the bulk of the catalyst into large diplegs leading down into the second fluidized bed of catalyst in the regenerator. Such a regenerator riser outlet is disclosed in US Patent 4,810,360.

Regardless of the method chosen, at least 90 % of the catalyst discharged from the transport riser preferably is quickly discharged into a second fluidized bed, discussed below. At least 90 % of the flue gas exiting the transport riser should be removed from the vessel without further contact with catalyst. This can be achieved to some extent by proper selection of bed geometry in the second fluidized bed, i.e., use of a relatively tall but thin containment vessel 80, and careful control of fluidizing conditions in the second fluidized bed.

The second fluidized bed achieves a second stage of regeneration of the catalyst, in a relatively dry atmosphere. The multistage regeneration of catalyst is beneficial from a temperature standpoint alone, i.e., it keeps the average catalyst temperature lower than the last stage temperature. This can be true even when the temperature of regenerated catalyst is exactly the same as in prior art units, because when staged regeneration is used the catalyst does not reach the highest temperature until the last stage. The hot catalyst has a relatively lower residence time at the highest temperature in a multistage regeneration process.

The second fluidized bed bears a superficial resemblance to the second dense bed used in prior art, high efficiency regenerators. There are several important differences which bring about profound changes in the function of the second fluidized bed.

In prior art second dense beds, the catalyst was merely collected and recycled (to the reactor and frequently to the coke combustor). Catalyst temperatures were typically 680-730°C (1250-1350°F), with some operating slightly hotter, perhaps approaching 760°C (1400°F). The average residence time of catalyst was usually 60 seconds or less. A small amount of air, typically around 1 or 2 % of the total air added to the regenerator, was added to the dense bed to keep it fluidized and enable it to flow into collectors for recycle to the reactor. The superficial gas velocity in the bed was typically less than 15 cm/s (0.5 fps), usually 3cm/s (0.1 fps). The bed was relatively dense, bordering on incipient fluidization. This was efficient use of the second dense bed as a catalyst collector, but meant that little or no regeneration of catalyst was achieved in the second dense bed. Because of the low vapor velocity in the bed, very poor use would be made of even the small amounts of oxygen added to the bed. Large fluidized beds such as this are characterized, or plagued, by generally poor fluidization, and relatively large gas bubbles.

In the present process, the second fluidized bed plays a much more significant role in regenerating the catalyst. To achieve this, the first step is to provide an increased residence time in the second fluidized bed, typically of at least 1 minute, and preferably much longer. This increased residence time can be achieved by adding more catalyst to the unit, and letting it accumulate in the second fluidized bed. In addition, in the present process much more air is added to the second fluidized bed for several reasons. First, more carbon burning occurs in the second fluidized bed, so the air is needed for combustion. Second, to improve fluidization in the second fluidized bed, much higher superficial vapor velocities are necessary. Also the density of the catalyst in the second fluidized bed is decreased. This reduced density is a characteristic of better fluidization, and also somewhat beneficial in that although the present bed may be twice as high as a bed of the prior art it will not have to contain twice as much catalyst.

| SECOND DENSE BED CONDITIONS | | | | |
|---|---|---|---|---|
| | | Good | Preferred | Best |
| Temperature | °F | 1200-1700 | 1300-1600 | 1350-1500 |
| | °C | 650 -930 | 700 -870 | 730 -815 |
| Catalyst Residence Time, Seconds | | 30 -500 | 45 -200 | 60 -180 |
| Vapor velocity, | fps | 0.5 -5 | 1 - 4 | 1.5 3.5 |
| | m/s | 0.15-1.5 | 0.3- 1.2 | 0.5 -1.1 |
| % total air added | | 0 - 90 | 2 - 60 | 5 - 40 |
| H2 Removal, % | | 0 - 25 | 1 - 10 | 1 - 5 |
| Carbon Removal, % | | 10 - 70 | 5 - 60 | 10 - 40 |

Operating the second fluidized bed with more catalyst inventory, and higher superficial vapor velocity, allows an extra stage of catalyst regeneration, either to achieve cleaner catalyst or to more gently remove the carbon and thereby extend catalyst life. Enhanced stability is achieved because much of the regeneration, and much of the catalyst residence time in the regenerator, is under drier conditions than could be achieved in prior art designs.

### CO COMBUSTION PROMOTER

Use of a CO combustion promoter in the regenerator or combustion zone is not essential for the practice of the present invention, however, it may be beneficial. These materials are well-known.

U.S. 4,072,600 and U.S. 4,235,754 disclose operation of an FCC regenerator with minute quantities of a CO combustion promoter. From 0.01 to 100 ppm Pt metal or enough other metal to give the same CO oxidation, may be used with good results. Very good results are obtained with as little as 0.1 to 10 wt. ppm platinum present on the catalyst in the unit. Pt can be replaced by other metals, but usually more metal is then required. An amount of promoter which would give a CO oxidation activity equal to 0.3 to 3 wt. ppm of platinum is preferred.

### DISCUSSION

The control method of the present invention can be readily added to existing high efficiency regenerators. Most of the regenerator can be left untouched, as the modifications to install differential temperature probes in the regenerator cyclones, or flue gas analyzers, are minor. Usually only minor modifications will be needed in the second dense bed to accommodate the additional combustion air, and perhaps to add extra air rings, and new cyclones.

The riser mixer (if used), the coke combustor, and the dilute phase transport riser require no modification.

The only modification that is strongly recommended for existing high efficiency regenerators is incorporation of a means at the exit of the dilute phase transport riser to rapidly and completely separate catalyst from steam laden flue gas. The steam laden flue gas should be isolated from the catalyst collected in the second fluidized bed. Preferably a closed cyclone system is used to separate and isolate steam laden flue gas from catalyst.

Preferably much, and even most, of the coke combustion occurs in the dry atmosphere of the second fluidized bed. Temperatures in the second fluidized bed are high, so rapid coke combustion can be achieved even in a bubbling fluidized bed.

The process of the present invention permits continuous on stream optimization of the catalyst regeneration process. Achieving a significant amount of coke combustion in the second fluidized bed of a high efficiency regenerator also increases the coke burning capacity of the unit, for very little capital expenditure.

The process of the present invention gives refiners a way to achieve the benefits of multi-stage catalyst regeneration in a high efficiency catalyst regenerator. The process accommodates the inevitable changes in coke make that occur in FCC operation by forcing most of the change to be dealt with in the coke combustor, which is the most robust, and controllable, place to burn coke in an FCC regenerator.

Both coke combustion and afterburning in the coke combustor can be limited to a great extent by restricting the amount of combustion air added to the coke combustor, provided the unit does not contain excessive amounts of CO combustion promoter.

Preferably, the coke burning characteristics of the coke combustor are varied directly, by controllably limiting the amount of hot regenerated catalyst recycled to the coke combustor from the second fluidized bed. In an extreme case, little or no hot regenerated catalyst is recycled to the coke combustor. Because the incoming catalyst is relatively cool, i.e., is merely at the temperature at which it is withdrawn from the catalyst stripper, carbon burning rates are very low even though there is intense fluidization in the coke combustor. At the generally low temperature which prevails in a coke combustor operating without catalyst recycle, there is usually not sufficient residence time to burn more than 10 - 90 % of the coke on the spent catalyst, and usually only 20 - 75 % of the coke will be burned in the primary regeneration stage consisting of the coke combustor and the dilute phase transport riser. The relatively low temperatures also hinder to some extent the afterburning of CO to CO2. Thus there will always be a relatively large amount of CO present, whether produced by coke combustion or to a lesser extent by the reaction of CO2 with carbon.

For maximum efficiency, refiners will keep relatively constant operation in the second fluidized bed, and make most of the changes to unit operation occur in the coke combustor. It is also possible to change the operation of the primary and secondary stages of regeneration together, so that the relative amounts of coke burning in each stage remain constant.

By operating in accordance with the teachings of the present invention, refiners will be able to obtain the benefits of coke burning in a generally reducing atmosphere (less NOx, reduced formation of highly oxidized forms of vanadium, lower temperatures, greater coke burning capacity) while having a reliable and responsive way to control the unit which will deal with upsets and other changes which affect the units coke make.

## Claims

1. A process for regenerating spent fluidized catalytic cracking catalyst comprising the steps of:
a) partially regenerating said spent cracking catalyst in a primary regeneration zone, comprising a fast fluidized bed coke combustor and a superimposed dilute phase transport riser, by charging said spent catalyst to said fast fluidized bed coke combustor having an inlet for spent catalyst, an inlet for recycled regenerated catalyst and an inlet for primary regeneration gas, to produce partially regenerated catalyst and flue gas comprising at least 1.0 mole % CO, which are passed up into the dilute phase transport riser and discharged therefrom to form a flue gas rich stream comprising at least 1 mole % CO and a catalyst rich stream comprising partially regenerated catalyst; and
b) completing the regeneration of said partially regenerated catalyst in a secondary regeneration zone comprising a second fluidized bed adapted to receive said partially regenerated catalyst and having means for adding additional regeneration gas to said second fluidized bed in an amount sufficient to complete the regeneration of said catalyst and produce regenerated catalyst and secondary flue gas; wherein:
i) the CO-containing flue gas stream from the said dilute phase transport riser is combined with said secondary flue gas to produce a combined flue gas stream;
ii) the conditions in said secondary regeneration zone are controlled such that said secondary flue gas contains less than 1 mole % CO and contains sufficient oxygen to react with the CO-containing flue gas stream from the said dilute transport riser;
iii) at least one flue gas composition or a differential temperature in said combined flue gas stream is monitored; and
iv) the amount of primary regeneration gas supplied to said fast fluidized bed coke combustor is controlled so as to maintain constant said monitored flue gas composition or differential temperature.

2. The process of claim 1 wherein said second fluidized bed comprises a bubbling dense phase fluidized bed.

3. The process of claim 1 wherein a cyclone separator connected to said dilute phase transport riser outlet is used to separate partially regenerated catalyst from flue gas.

4. The process of claim 1 wherein the amount of primary regeneration gas supplied to said fast fluidized bed coke combustor and the amount of additional regeneration gas supplied to said second fluidized bed are controlled so as to maintain constant said monitored flue gas composition or differential temperature.

5. The process of claim 1 wherein the amount of regenerated catalyst recycled to the coke combustor from the second fluidized bed is controlled to limit the amount of coke burned in said coke combustor to 10 to 90 % of the coke on said spent catalyst.

## Patentansprüche

1. Verfahren zum Regenerieren eines verbrauchten Katalysators vom katalytischen Wirbelschichtcracken, welches die Schritte umfaßt:
a) teilweises Regenerieren des verbrauchten Crackkatalysators in einer primären Regenerierungszone, die einen Kokscombustor mit schnell verwirbeltem Bett und einen darüber angeordneten Förderriser mit verdünnter Phase umfaßt, indem der verbrauchte Katalysator dem Kokscombustor mit schnell verwirbeltem Bett zugeführt wird, der einen Einlaß für verbrauchten Katalysator, einen Einlaß für rezirkulierten regenerierten Katalysator und einen Einlaß für primäres Regenerierungsgas aufweist, wodurch ein teilweise regenerierter Katalysator und Abgas, das mindestens 1,0 Mol-% CO umfaßt, erzeugt werden, die nach oben in den Förderriser mit verdünnter Phase geleitet und daraus abgegeben werden, wodurch ein an Abgas reicher Strom, der mindestens 1 Mol-% CO umfaßt, und ein an Katalysator reicher Strom erzeugt werden, der teilweise regenerierten Katalysator umfaßt, und
b)Vollendung der Regenerierung des teilweise regenerierten Katalysators in einer sekundären Regenerierungszone, die ein zweites Wirbelbett umfaßt, das der Aufnahme des teilweise regenerierten Katalysators dient und eine Einrichtung aufweist, um dem zweiten Wirbelbett weiteres Regenerierungsgas in einer ausreichenden Menge zuzuführen, damit die Regenerierung des Katalysators vollendet wird und regenerierter Katalysator und ein sekundäres Abgas erzeugt werden, wobei:
i) der CO enthaltende Abgasstrom aus dem Förderriser mit verdünnter Phase mit dem sekundären Abgas gemischt wird, wodurch ein gemischter Abgasstrom erzeugt wird,
ii) die Bedingungen in der sekundären Regenerierungszone so geregelt werden, daß das sekundäre Abgas weniger als 1 Mol-% CO und ausreichend Sauerstoff für die Reaktion mit dem CO enthaltenden Abgasstrom aus dem Förderriser mit verdünnter Phase enthält,
iii) mindestens eine Abgaszusammensetzung oder ein Temperaturunterschied im gemischten Abgasstrom überwacht wird, und
iv) die Menge des primären Regenerierungsgases, die dem Kokscombustor mit schnell verwirbeltem Bett zugeführt wird, so geregelt wird, daß die überwachte Abgaszusammensetzung oder der überwachte Temperaturunterschied konstant gehalten werden.

2. Verfahren nach Anspruch 1, wobei das zweite Wirbelbett ein Wirbelbett mit aufwallender dichter Phase umfaßt.

3. Verfahren nach Anspruch 1, wobei ein Zyklonabscheider, der mit dem Auslaß des Förderrisers mit verdünnter Phase verbunden ist, verwendet wird, um den teilweise regenerierten Katalysator vom Abgas abzutrennen.

4. Verfahren nach Anspruch 1, wobei die Menge des primären Regenerierungsgases, die dem Kokscombustor mit schnell verwirbeltem Bett zugeführt wird, und die Menge des zusätzlichen Regenerierungsgases, die dem zweiten Wirbelbett zugeführt wird, geregelt werden, damit die überwachte Abgaszusammensetzung oder der Temperaturunterschied konstant gehalten werden.

5. Verfahren nach Anspruch 1, wobei die Menge des regenerierten Katalysators, die aus dem zweiten Wirbelbett zum Kokscombustor rezirkuliert wird, geregelt wird, um die im Kokscombustor verbrannte Koksmenge auf 10 bis 90 % des Koks auf dem verbrauchten Katalysator zu begrenzen.

## Revendications

1. Un procédé de régénération de catalyseur de craquage catalytique usé en lit fluidisé comprenant les étapes suivantes :
a) régénération partielle dudit catalyseur de craquage usé dans une zone de régénération primaire comprenant une installation de combustion du coke en lit fluidisé rapide et un réacteur superposé de transport ascendant en phase diluée, en chargeant ledit catalyseur usé dans ladite installation de combustion du coke en lit fluidisé rapide comportant une entrée pour le catalyseur usé, une entrée pour le catalyseur régénéré recyclé et une entrée pour le gaz de régénération primaire, en vue de produire du catalyseur partiellement régénéré et du gaz effluent comprenant au moins 1,0 mole % de CO, que l'on fait passer au-dessus dans le réacteur de transport ascendant en phase diluée et que l'on en évacue de ce dernier pour former un courant riche en gaz effluent comprenant au moins 1 mole % de CO et un courant riche en catalyseur comprenant du catalyseur partiellement régénéré et
b) achèvement de la régénération dudit catalyseur partiellement régénéré dans une zone de régénération secondaire comprenant un second lit fluidisé conçu pour recevoir ledit catalyseur partiellement régénéré et comportant des moyens d'introduction de gaz de régénération supplémentaire dans ledit second lit fluidisé en quantité suffisante pour terminer la régénération du catalyseur et produire du catalyseur régénéré et un effluent gazeux secondaire, dans lequel :
i) le courant de gaz effluent contenant du CO provenant dudit réacteur de transport ascendant en phase diluée est combiné avec ledit effluent gazeux secondaire pour produire un courant d'effluent combiné ;
ii) les conditions dans ladite zone de régénération secondaire sont contrôlées de façon que ledit effluent secondaire contienne moins de 1 mole % de CO et contienne suffisamment d'oxygène pour réagir avec le courant de gaz d'échappement contenant du CO provenant dudit réacteur de transport ascendant en phase diluée ;
iii) au moins la composition de gaz effluent ou la différentielle de température dans ledit courant de gaz effluent combiné est surveillée ; et
iv) la quantité de gaz de régénération primaire introduite dans ladite installation de coke en lit fluidisé rapide est contrôlée de façon à maintenir constante ladite composition ou ladite différentielle de température de l'effluent gazeux surveillée.

2. Le procédé de la revendication 1, dans lequel ledit second lit fluidisé comprend un lit fluidisé à phase dense bouillonnant.

3. Le procédé de la revendication 1, dans lequel un séparateur à cyclones raccordé à ladite sortie du réacteur à transport ascendant en phase diluée est utilisée pour séparer du catalyseur partiellement régénéré du gaz effluent.

4. Le procédé selon la revendication 1, dans laquelle la quantité de gaz de régénération primaire introduite dans ladite installation de combustion du coke en lit fluidisé rapide et la quantité de gaz de régénération supplémentaire introduite dans ledit second lit fluidisé sont contrôlées de façon à maintenir constante ladite composition surveillée de gaz effluent ou ladite différentielle de température.

5. Le procédé selon la revendication 1, dans lequel la quantité de catalyseur régénéré recyclé dans l'installation de combustion du coke à partir du second lit fluidisé est contrôlée de façon à limiter la quantité de coke brûlé dans ladite installation de combustion de coke à une proportion de 10 à 90 % du code déposé sur ledit catalyseur usé.
